# EUROPEAN PATENT APPLICATION

(11) **EP 4 554 288 A1**
(43) Date of publication of application: **14.05.2025**
(21) Application number: 22949919.9
(22) Date of filing: 08.07.2022
(51) Int. Cl.: H04W 52/02

(54) **METHOD AND APPARATUS FOR TRANSMITTING INSTRUCTION INFORMATION, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/104745
(87) International publication number: WO 2024/007338

(57) **Abstract**

The present disclosure provides a method for transmitting indication information, a communication device, and a non-transitory computer-readable storage medium. The method includes sending the indication information to a network device, where the indication information is used for indicating the network device to skip, within a first duration, uplink reception of a preset channel.

## Description

### TECHNICAL FIELD

The present disclosure relates to the field of wireless communication technology and, in particular, to a method and apparatus for transmitting indication information, and a readable storage medium.

### BACKGROUND

In release 18 (R18) of the 3rd generation partnership project (3GPP) protocol, unnecessary uplink reception may be reduced in order to conserve energy consumption of a network device. For example, a terminal is configured with semi-static uplink transmission resources. On the semi-static uplink transmission resources, a user equipment (UE) may not transmit uplink information on every resource, and the network device needs to perform blind-detect reception.

It is necessary to solve the problem of wasting the energy consumption of the network device caused by the blind-detect reception of the uplink transmission resources in semi-static configurations.

### SUMMARY

The present disclosure provides a method and apparatus for transmitting indication information, and a readable storage medium.

In a first aspect, the present disclosure provides a method for sending indication information performed by a UE, where the method includes:
sending the indication information to a network device, where the indication information is used for indicating the network device to skip, within a first duration, uplink reception of a preset channel.

In the method of the present disclosure, the UE notifies, by sending the indication information to the network device, the network device of the time period and channel that can be skipped for the uplink reception. Thereby, the network device, based on the indication information, can skip the uplink reception of the preset channel within the first duration to reduce the blind-detect reception of the network device and reduce the energy consumption of the network device.

In some possible embodiments, the sending the indication information to the network device includes:
sending, in response to the network device configuring a configured grant physical uplink shared channel (CG-PUSCH) for the UE, the indication information to the network device via the CG-PUSCH.

In some possible embodiments, the sending the indication information to the network device includes:
sending the indication information to the network device through uplink control information (CG-UCI) carried in the CG-PUSCH.

In some possible embodiments, in response to the network device configuring a plurality of sets of resource configurations of preset channels, the indication information is used for indicating the network device to skip, within the first duration, the uplink reception of all the preset channels corresponding to the plurality of sets of resource configurations.

In some possible embodiments, the preset channel includes a CG-PUSCH, or a physical uplink control channel (PUCCH) used for transmitting a scheduling request (SR).

In some possible embodiments, in response to the network device configuring a plurality of sets of resource configurations of preset channels, the indication information is used for indicating the network device to skip, within the first duration, the uplink reception of a preset channel satisfying a set condition.

In some possible embodiments, in response to the preset channels being CG-PUSCHs, the preset channel satisfying the set condition is a first CG-PUSCH carrying the indication information.

In some possible embodiments, in response to the preset channels being CG-PUSCHs, the preset channel satisfying the set condition includes a first CG-PUSCH carrying the indication information, and at least one second CG-PUSCH having a same characteristic parameter as the first CG-PUSCH.

In some possible embodiments, in response to the preset channels being PUCCHs used for transmitting an SR, the preset channel satisfying the set condition includes a PUCCH that is used for transmitting the SR and has a same characteristic parameter as a first CG-PUSCH, and the first CG-PUSCH is a CG-PUSCH carrying the indication information.

In some possible embodiments, the characteristic parameter includes at least one of:
a period;
a group identification; and
a priority identification.

In some possible embodiments, the method further includes:
determining a start position of the first duration.

In some possible embodiments, the determining the start position of the first duration includes:
determining, based on a CG-PUSCH where the indication information is located, a start timepoint of a next CG-PUSCH of the CG-PUSCH where the indication information is located as the start position.

In some possible embodiments, the determining the start position of the first duration includes:
determining a preset timepoint after an end timepoint of a CG-PUSCH where the indication information is located as the start position, where a second duration is spaced between the end timepoint and the preset timepoint.

In some possible embodiments, the method further includes:
receiving configuration information sent by the network device, where the configuration information is used for indicating the first duration.

In a second aspect, the present disclosure provides a method for receiving indication information performed by a network device, where the method includes:
receiving the indication information sent by a UE, where the indication information is used for indicating the network device to skip, within a first duration, uplink reception of a preset channel; and
skipping, based on the indication information, the uplink reception of the preset channel within the first duration.

In the method of the present disclosure, the network device is informed, through the indication information reported by the UE, of the time period and channel that can be skipped for the uplink reception. Thereby, the network device, based on the indication information, can skip the uplink reception of the preset channel within the first duration to reduce the blind-detect reception of the network device and reduce the energy consumption of the network device.

In some possible embodiments, the receiving the indication information sent by the UE includes:
receiving CG-UCI carried by the UE in a CG-PUSCH, where the CG-UCI includes the indication information.

In some possible embodiments, the method further includes:
determining, based on the CG-PUSCH where the CG-UCI is located, a start position of the first duration.

In some possible embodiments, the determining, based on the CG-PUSCH where the CG-UCI is located, the start position of the first duration includes:
determining a start timepoint of a next CG-PUSCH of the CG-PUSCH where the CG-UCI is located as the start position.

In some possible embodiments, the determining, based on the CG-PUSCH where the CG-UCI is located, the start position of the first duration includes:
determining a preset timepoint after an end timepoint of the CG-PUSCH where the CG-UCI is located as the start position, where a second duration is spaced between the end timepoint and the preset timepoint.

In some possible embodiments, in response to the network device configuring a plurality of sets of resource configurations of preset channels, the indication information is used for indicating the network device to skip, within the first duration, the uplink reception of all the preset channels corresponding to the plurality of sets of resource configurations.

In some possible embodiments, the skipping, based on the indication information, the uplink reception of the preset channel within the first duration includes:
skipping within the first duration, based on the indication information, the uplink reception of all the preset channels corresponding to the plurality of sets of resource configurations.

In some possible embodiments, the preset channels include CG-PUSCHs, or PUCCHs used for transmitting an SR.

In some possible embodiments, the skipping, based on the indication information, the uplink reception of the preset channel within the first duration includes:
skipping within the first duration, based on the indication information, the uplink reception of a CG-PUSCH satisfying a set condition; where
the indication information is used for indicating the network device to skip within the first duration, in a scenario where the network device configures a plurality of sets of resource configurations of CG-PUSCHs, the uplink reception of the CG-PUSCH satisfying the set condition.

In some possible embodiments, the preset channel satisfying the set condition includes a first CG-PUSCH carrying the indication information, and/or at least one second CG-PUSCH having a same characteristic parameter as the first CG-PUSCH.

In some possible embodiments, the skipping, based on the indication information, the uplink reception of the preset channel within the first duration includes:
skipping within the first duration, based on the indication information, the uplink reception of a PUCCH that is used for transmitting an SR and satisfies a set condition, where
the indication information is used for indicating the network device to skip within the first duration, in a scenario where the network device configures a plurality of sets of resource configurations of PUCCHs used for transmitting the SR, the uplink reception of the PUCCH that is used for transmitting the SR and satisfies the set condition.

In some possible embodiments, the preset channel satisfying the set condition includes the PUCCH that is used for transmitting the SR and has a same characteristic parameter as a first CG-PUSCH, and the first CG-PUSCH is a CG-PUSCH carrying the indication information.

In some possible embodiments, the method further includes:
in response to receiving a wake-up signal from the UE, terminating the first duration, and performing the uplink reception of the preset channel.

In a third aspect, the present disclosure provides an apparatus for sending indication information. The apparatus may be configured to perform steps executed by the UE in the first aspect or in any of the possible designs of the first aspect described above. The UE may implement the functions in the above methods by means of a hardware structure, a software module or a hardware structure plus a software module.

In implementing the apparatus shown in the third aspect by means of the software module, the apparatus may include a transceiver module, where the transceiver module may be configured to support the communication device for communication.

In performing the steps of the first aspect, the transceiver module is configured to send the indication information to a network device, where the indication information is used for indicating the network device to skip, within a first duration, uplink reception of a preset channel.

In a fourth aspect, the present disclosure provides an apparatus for receiving indication information. The apparatus may be configured to perform steps executed by the network device in the second aspect or in any of the possible designs of the second aspect described above. The network device may implement the functions in the above methods by means of a hardware structure, a software module or a hardware structure plus a software module.

In implementing the apparatus shown in the fourth aspect by means of the software module, the apparatus may include a transceiver module and a processing module coupled to each other, where the transceiver module may be configured to support the communication device for communication, and the processing module may be configured for the communication device to perform a processing operation, such as generating information/messages to be sent, or processing a signal as received to obtain information/messages.

In performing the steps of the second aspect, the transceiver module is configured to receive the indication information sent by a UE, where the indication information is used for indicating the network device to skip, within a first duration, uplink reception of a preset channel. The processing module is configured to skip, based on the indication information, the uplink reception of the preset channel within the first duration.

In a fifth aspect, the present disclosure provides a communication device that includes a processor and a memory. The memory is configured to store a computer program; and the processor is configured to execute the computer program, thereby implementing the first aspect or any one of the possible designs of the first aspect.

In a sixth aspect, the present disclosure provides a communication device that includes a processor and a memory. The memory is configured to store a computer program; and the processor is configured to execute the computer program, thereby implementing the second aspect or any one of the possible designs of the second aspect.

In a seventh aspect, the present disclosure provides a computer-readable storage medium. The computer-readable storage medium stores an instruction (or referred to as a computer program, or a program) that, when invoked and executed on a computer, causes the computer to perform the first aspect or any one of the possible designs of the first aspect.

In an eighth aspect, the present disclosure provides a computer-readable storage medium. The computer-readable storage medium stores an instruction (or referred to as a computer program, or a program) that, when invoked and executed on a computer, causes the computer to perform the second aspect or any one of the possible designs of the second aspect.

It should be understood that the above general description and the subsequent detailed description are exemplary and explanatory only, and do not limit the present disclosure.

### BRIEF DESCRIPTION OF THE DRAWINGS

The accompanying drawings illustrated herein are used for providing a further understanding of the embodiments of the present disclosure and form a part of the present application, and the schematic embodiments of the embodiments of the present disclosure and their illustrations are used for explaining the embodiments of the present disclosure and do not constitute an undue limitation on the embodiments of the present disclosure. In the accompanying drawings:
The accompanying drawings herein are incorporated into the specification and form a part of the specification, illustrate embodiments in accordance with the embodiments of the present disclosure, and are used together with the specification to explain principles of the embodiments of the present disclosure.
FIG. 1 is a schematic diagram of an architecture of a wireless communication system provided by an embodiment of the present disclosure.
FIG. 2 is a flowchart of a method for transmitting indication information illustrated according to an exemplary embodiment.
FIG. 3 is a flowchart of another method for transmitting indication information illustrated according to an exemplary embodiment.
FIG. 4 is a flowchart of a method for sending indication information illustrated according to an exemplary embodiment.
FIG. 5 is a flowchart of another method for sending indication information illustrated according to an exemplary embodiment.
FIG. 6 is a flowchart of a method for receiving indication information illustrated according to an exemplary embodiment.
FIG. 7 is a flowchart of another method for receiving indication information illustrated according to an exemplary embodiment.
FIG. 8 is a schematic diagram of transmission of indication information illustrated according to an exemplary embodiment.
FIG. 9 is a schematic diagram of transmission of indication information illustrated according to another exemplary embodiment.
FIG. 10 is a block diagram of an apparatus for sending indication information illustrated according to an exemplary embodiment.
FIG. 11 is a block diagram of a UE illustrated according to an exemplary embodiment.
FIG. 12 is a block diagram of an apparatus for receiving indication information illustrated according to an exemplary embodiment.
FIG. 13 is a block diagram of a communication device illustrated according to an exemplary embodiment.

### DETAILED DESCRIPTION

The embodiments of the present disclosure are further described in connection with the accompanying drawings and the Detailed Description.

The exemplary embodiments are described in detail here, examples of which are indicated in the accompanying drawings. When the following description involves the accompanying drawings, the same numerals in different accompanying drawings indicate the same or similar elements unless otherwise indicated. The embodiments described in the following exemplary embodiments do not represent all embodiments consistent with the embodiments of the present disclosure. On the contrary, they are only examples of devices and methods consistent with some aspects of the present disclosure as detailed in the appended claims.

The terms used in the embodiments of the present disclosure are used solely for the purpose of describing particular embodiments, and are not intended to limit the embodiments of the present disclosure. The singular forms of "a" and "the" used in the embodiments of the present disclosure and the appended claims are also intended to include the plural form, unless the context clearly indicates other meanings. It should also be understood that the term "and/or" as used in this article refers to and includes any or all possible combinations of one or more of the associated listed items.

It should be understood that although the terms first, second, third, etc. may be used in the embodiments of the present disclosure to describe various types of information, such information should not be limited to these terms. These terms are only used to distinguish the same type of information from one another. For example, without departing from the scope of the embodiments of the present disclosure, the first information may also be referred to as the second information, and similarly, the second information may also be referred to as the first information. Depending on the context, the phrase "if" and "in case" as used herein may be interpreted as "at the time of......", "when ......", or "in response to determining".

The embodiments of the present disclosure are described in detail below, and examples of the embodiments are shown in the accompanying drawings, where the same or similar symbols throughout indicate the same or similar elements. The embodiments described below with reference to the accompanying drawings are exemplary and intended to be used for explaining the present disclosure, and should not be construed as the limitation on the present disclosure.

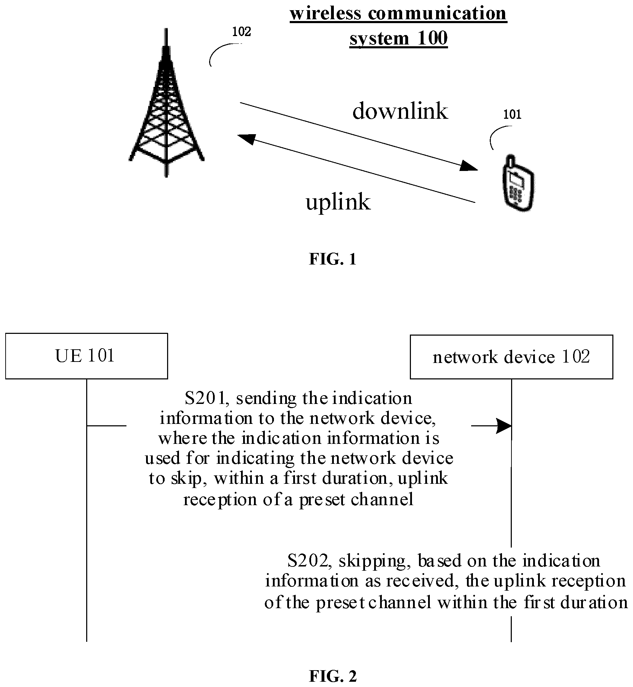

As shown in FIG. 1, a method for transmitting indication information provided by the embodiments of the present disclosure may be applied to a wireless communication system 100. The wireless communication system may include a UE 101 and a network device 102. In some embodiments, the UE 101 is configured to support carrier aggregation, and may be connected to a plurality of carrier units of the network device 102, where the plurality of carrier units include a primary carrier unit, and one or more secondary carrier units.

It should be understood that the above wireless communication system 100 may be applicable to both low frequency and high frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for microwave access (WiMAX) communication system, a cloud radio access network (CRAN) system, a future 5th-generation (5G) system, a new radio (NR) communication system, or a future evolution public land mobile network (PLMN) system, etc.

The UE 101 shown above may be a terminal, an access terminal, a terminal unit, a terminal station, a mobile station (MS), a remote station, a remote terminal, a mobile terminal, a wireless communication device, a terminal agent, or a terminal device, etc. The UE 101 may have a wireless transceiving function, and be capable of communicating (e.g., wirelessly communicating) with one or more network devices of one or more communication systems, and accepting a network service provided by the network device, where the network device herein includes, but is not limited to, the network device 102 illustrated in the drawing.

In some embodiments, the UE 101 may be a cellular phone, a cordless phone, a session initiation protocol (SIP) phone, a wireless local loop (WLL) station, a personal digital assistant (PDA) device, a handheld device with a wireless communication function, a computing device or other processing device connected to a wireless modem, an in-vehicle device, a wearable device, a terminal device in a future 5G network, or a terminal device in a future evolution PLMN network, etc.

The network device 102 may be an access network device (or referred to as an access network site). In some embodiments, the access network device refers to a device providing a network access function, such as a radio access network (RAN) base station. The network device 102 may specifically include a base station (BS), or include a base station and a radio resource management device configured to control the base station, etc. The network device 102 may further include a relay station (a relay device), an access point, and a base station in the future 5G network, a base station in the future evolution PLMN network, or an NR base station, etc. The network device 102 may be a wearable device or an in-vehicle device. The network device 102 may also be a communication chip with a communication module.

For example, the network device 102 includes, but is not limited to, a next-generation base station (gnodeB, gNB) in the 5G, an evolved node B (eNB) in the LTE system, a radio network controller (RNC), a node B (NB) in a wideband code division multiple access (WCDMA) system, a radio controller under the CRAN system, a base station controller (BSC), a base transceiver station (BTS) in a global system for mobile communication (GSM) system or a code division multiple access (CDMA) system, a home base station (for example, a home evolved nodeB, or a home node B (HNB)), a baseband unit (BBU), a transmitting and receiving point (TRP), a transmitting point (TP), or a mobile switching center, etc.

The embodiments of the present disclosure provide a method for transmitting indication information. With reference to FIG. 2, FIG. 2 is a method for transmitting indication information illustrated according to an exemplary embodiment. As shown in FIG. 2, the method includes steps S201~S203, and the specifics are as follows.

At step S201, a UE 101 sends the indication information to a network device 102, where the indication information is used for indicating the network device 102 to skip, within a first duration, uplink reception of a preset channel.

At step S202, the network device 102 skips, based on the indication information as received, the uplink reception of the preset channel within the first duration, where the indication information is used for indicating the network device 102 to skip, within the first duration, the uplink reception of the preset channel.

In some possible embodiments, the preset channel includes a configured grant physical uplink shared channel (CG-PUSCH), or a physical uplink control channel (PUCCH) used for transmitting a scheduling request (SR).

In an example, the indication information is used for indicating the network device 102 to skip, within the first duration, the uplink reception of the CG-PUSCH.

In an example, the indication information is used for indicating the network device 102 to skip, within the first duration, the uplink reception of the SR.

In some possible embodiments, in a scenario where the network device 102 configures a CG-PUSCH for the UE 101, the indication information is sent via the CG-PUSCH.

In an example, the UE 101 sends the uplink control information (CG-UCI) in the CG-PUSCH in an accompany manner, and carries the indication information in the CG-UCI.

In some possible embodiments, the first duration is a value configured by the network device 102.

In some possible embodiments, the value of the first duration is indicated in the CG-UCI.

In some possible embodiments, the first duration is determined by the network device 102 based on actual scheduling.

In an example, the network device 102 maintains a state of not receiving the preset channel within the first duration, and wakes up upon receiving a wake-up signal from the UE 101 and receives the preset channel, and the first duration is terminated.

In the embodiments of the present disclosure, the UE 101 notifies, by sending the indication information to the network device 102, the network device 102 of the time period and channel that can be skipped for the uplink reception. Thereby, the network device 102, based on the indication information, can skip the uplink reception of the preset channel within the first duration to reduce the blind-detect reception of the network device 102 and reduce the energy consumption of the network device 102.

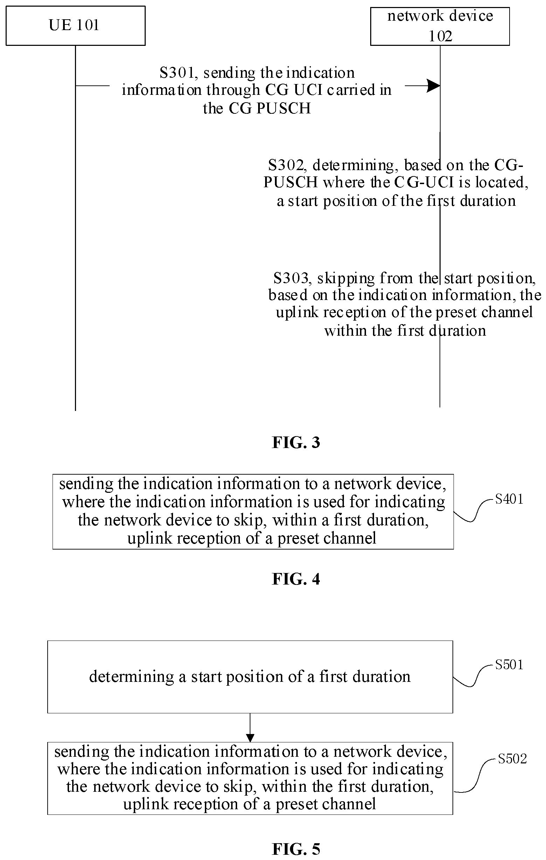

The embodiments of the present disclosure provide a method for transmitting indication information. With reference to FIG. 3, FIG. 3 is a method for transmitting indication information illustrated according to an exemplary embodiment. As shown in FIG. 3, the method includes steps S301~S303, and the specifics are as follows.

At step S301, the UE 101 sends the indication information to the network device through the CG-UCI carried in the CG-PUSCH, where the indication information is used for indicating the network device 102 to skip, within a first duration, uplink reception of a preset channel.

At step S302, the network device 102 determines, based on the CG-PUSCH where the CG-UCI is located, a start position of the first duration.

At step S303, the network device 102 skips from the start position, based on the indication information, the uplink reception of the preset channel within the first duration.

In some possible embodiments, a start timepoint of a next CG-PUSCH of the CG-PUSCH where the CG-UCI is located is the start position.

In some possible embodiments, a preset timepoint after an end timepoint of the CG-PUSCH where the CG-UCI is located is the start position, and a second duration is spaced between the end timepoint and the preset timepoint.

In an example, the second duration is set to be a demodulation time of the network device 102 for the CG-UCI.

In some possible embodiments, the first duration is a value configured by the network device 102.

In some possible embodiments, the value of the first duration is indicated in the CG-UCI.

In some possible embodiments, the first duration is determined by the network device 102 based on actual scheduling.

In an example, the network device 102 maintains a state of not receiving the preset channel within the first duration, and wakes up upon receiving a wake-up signal from the UE 101 and receives the preset channel, and the first duration is terminated.

In some possible embodiments, the UE 101 skips, by starting from the start position, the uplink sending of the preset channel for a duration of the first duration. The network device 102 skips, by starting from the start position, the uplink reception of the preset channel for a duration of the first duration.

In the embodiments of the present disclosure, based on the indication information of the UE 101, the network device 102 can start skipping the uplink reception of the preset channel at an appropriate time, reducing the blind-detect reception of the network device 102, and reducing the energy consumption of the network device 102.

The embodiments of the present disclosure provide a method for sending indication information that is performed by a UE 101. With reference to FIG. 4, FIG. 4 is a method for sending indication information illustrated according to an exemplary embodiment. As shown in FIG. 4, the method includes step S401, and the specifics are as follows.

At step S401, the UE 101 sends the indication information to a network device 102, where the indication information is used for indicating the network device 102 to skip, within a first duration, uplink reception of a preset channel.

In some possible embodiments, the preset channel includes a CG-PUSCH, or a PUCCH used for transmitting an SR.

In an example, the indication information is used for indicating the network device 102 to skip the uplink reception of the CG-PUSCH within the first duration.

In an example, the indication information is used for indicating the network device 102 to skip the uplink reception of the SR within the first duration.

In some possible embodiments, in a scenario where a plurality of sets of resource configurations of preset channels are configured, the indication information indicates the network device 102 to skip the uplink reception of all the preset channels, or skip the uplink reception of a preset channel satisfying a set condition.

In an example, when a plurality of sets of resource configurations of CG-PUSCHs are configured, the indication information indicates the network device 102 to skip the uplink reception of all the CG-PUSCHs, or skip the uplink reception of a CG-PUSCH satisfying a set condition.

In an example, when a plurality of sets of resource configurations of SRs are configured, the indication information indicates the network device 102 to skip the uplink reception of all the SRs, or skip the uplink reception of an SR satisfying a set condition.

In some possible embodiments, within the first duration corresponding to the indication information, the UE 101 does not perform the uplink data sending, or reduces the uplink service data sending.

In the embodiments of the present disclosure, the UE 101 notifies, by sending the indication information to the network device 102, the network device 102 of the time period and channel that can be skipped for the uplink reception. Thereby, the network device 102, based on the indication information, can skip the uplink reception of the preset channel within the first duration to reduce the blind-detect reception of the network device 102 and reduce the energy consumption of the network device 102.

The embodiments of the present disclosure provide a method for sending indication information that is performed by a UE 101. The method includes step S401', and the specifics are as follows.

At step S401', in response to a network device 102 configuring a CG-PUSCH for the UE 101, the indication information is sent to the network device 102 via the CG-PUSCH.

In some possible embodiments, a period of the CG-PUSCH is less than a service period of the uplink service data.

In some possible embodiments, a plurality of CG-PUSCHs are included between data frames of adjacent periods.

In some possible embodiments, the network device 102 may configure a plurality of sets of CG-PUSCHs for the UE 101. Each of the sets of CG-PUSCHs is provided with corresponding configuration parameters: e.g., a start bias value, a period, etc.

In some possible embodiments, the indication information is used for indicating the network device 102 to skip, within the first duration, the uplink reception of the preset channel.

In some possible embodiments, the preset channel includes a CG-PUSCH, or a PUCCH for transmitting an SR.

In the embodiments of the present disclosure, the UE 101 sends the indication information via the CG-PUSCH to indicate the network device 102 to skip, within the first duration, the uplink reception of the preset channel.

The embodiments of the present disclosure provide a method for sending indication information that is performed by a UE 101. The method includes step S401", and the specifics are as follows.

At step S401", the UE 101 sends the indication information to a network device 102 through CG-UCI carried in a CG-PUSCH.

In some possible embodiments, the CG-UCI is the uplink control information sent in each CG-PUSCH in an accompany manner.

In some possible embodiments, the CG-UCI further includes a process identification (ID) of a hybrid automatic repeat request (HARQ), a redundancy version (RV), a new data indication, and a channel sharing parameter (COT sharing), etc. In some embodiments, the new data indication is used for indicating whether the data is transmitted for the first time or retransmitted.

In some possible embodiments, the indication information is used for indicating the network device 102 to skip, within the first duration, the uplink reception of the preset channel.

In some possible embodiments, the preset channel includes a CG-PUSCH, or a PUCCH used for transmitting an SR.

In the embodiments of the present disclosure, the UE 101 carries the indication information through the CG-UCI, thereby facilitating the network device 102 to skip, based on the indication information, the uplink reception of the preset channel, which saves the energy consumption.

The embodiments of the present disclosure provide a method for sending indication information that is performed by a UE 101. The method includes step S401.

At step S401, the UE 101 sends indication information to a network device 102, where the indication information is used for indicating the network device 102 to skip, within a first duration, uplink reception of a preset channel.

In some embodiments, in response to the network device 102 configuring a plurality of sets of resource configurations of preset channels, the indication information is used for indicating the network device 102 to skip, within the first duration, the uplink reception of all the preset channels corresponding to the plurality of sets of resource configurations.

In some possible embodiments, the indication information is applied to all the preset channels.

In some possible embodiments, the preset channels include CG-PUSCHs, or PUCCHs used for transmitting the SR.

In an example, in response to the network device 102 configuring a plurality of sets of CG-PUSCHs for the UE 101, the indication information is used for indicating the network device 102 to skip, within first duration, the reception of all the CG-PUSCHs.

In an example, in response to the network device 102 configuring a plurality of sets of SRs for the UE 101, the indication information is used for indicating the network device 102 to skip, within first duration, the reception of all the SRs.

In the embodiments of the present disclosure, the indication information reported by the UE 101 is applied to all the preset channels, facilitating the network device 102 to skip within first duration, based on the indication information, the uplink reception of all the preset channels, which effectively saves the energy consumption of the network device 102.

The embodiments of the present disclosure provide a method for sending indication information that is performed by a UE 101. The method includes step S401.

At step S401, the UE 101 sends indication information to a network device 102, where the indication information is used for indicating the network device 102 to skip, within a first duration, uplink reception of a preset channel.

In some embodiments, in response to the network device 102 configuring a plurality of sets of resource configurations of preset channels, the indication information is used for indicating the network device 102 to skip, within the first duration, the uplink reception of a preset channel satisfying a set condition.

In some possible embodiments, the indication information is applied to the preset channel that satisfies the set condition.

In some possible embodiments, the preset channels include CG-PUSCHs, or PUCCHs used for transmitting the SR.

In the embodiments of the present disclosure, the indication information reported by the UE 101 is applied to a part of the preset channels that satisfies the set condition, facilitating the network device 102 to skip within the first duration, based on the indication information, the uplink reception of this part of the preset channels, which effectively saves the energy consumption of the network device 102.

The embodiments of the present disclosure provide a method for sending indication information that is performed by a UE 101. The method includes step S401.

At step S401, the UE 101 sends the indication information to a network device 102, where the indication information is used for indicating the network device 102 to skip, within a first duration, uplink reception of a preset channel.

In response to the network device 102 configuring a plurality of sets of resource configurations of preset channels, the indication information is used for indicating the network device 102 to skip, within the first duration, the uplink reception of a preset channel satisfying a set condition.

In some embodiments, in response to the preset channels being CG-PUSCHs, the preset channel satisfying the set condition is a first CG-PUSCH carrying the indication information.

In some possible embodiments, the preset channel has a correspondence with the set condition.

In some possible embodiments, the first CG-PUSCH may be one or more.

In the embodiments of the present disclosure, in a scenario where the preset channels being CG-PUSCHs, the network device 102 skips, within the first duration, the uplink reception of at least one first CG-PUSCH, thereby saving the power consumption.

The embodiments of the present disclosure provide a method for sending indication information that is performed by a UE 101. The method includes step S401.

At step S401, the UE 101 sends the indication information to a network device 102, where the indication information is used for indicating the network device 102 to skip, within a first duration, uplink reception of a preset channel.

In response to the network device 102 configuring a plurality of sets of resource configurations of preset channels, the indication information is used for indicating the network device 102 to skip, within the first duration, the uplink reception of a preset channel satisfying a set condition.

In some embodiments, in response to the preset channels being CG-PUSCHs, the preset channel satisfying the set condition includes a first CG-PUSCH carrying the indication information, and at least one second CG-PUSCH having a same characteristic parameter as the first CG-PUSCH.

In some possible embodiments, the network device 102 may configure a plurality of sets of CG-PUSCHs for the UE 101. Each of the sets of CG-PUSCHs is provided with corresponding configuration parameters: e.g., a start bias value, a period, etc.

In some possible embodiments, the characteristic parameter includes at least one of the following:
a period;
a group identification;
a priority identification.

In an example, the period of the second CG-PUSCH is the same as the period of the first CG-PUSCH.

In an example, the priority identification of the second CG-PUSCH is the same as the priority identification of the first CG-PUSCH.

For example, based on the indication of the priority identification, both the second CG-PUSCH and the first CG-PUSCH correspond to a low priority.

In an example, the group identification of the second CG-PUSCH is the same as the group identification of the first CG-PUSCH. In some embodiments, the group identification of each of the sets of CG-PUSCHs is included in the resource configuration information corresponding to that CG-PUSCH.

In an example, multiple sets of CG-PUSCHs with the same group identification may have different start bias values, and the remaining parameters may be the same. The multiple sets of CG-PUSCHs with the same group identification are used for transmitting the same service flow.

In the embodiments of the present disclosure, in a scenario where the preset channels are CG-PUSCHs, the network device 102 skips, within the first duration, the uplink reception of the first CG-PUSCH and the second CG-PUSCH, thereby saving the power consumption.

The embodiments of the present disclosure provide a method for sending indication information that is performed by a UE 101. The method includes step S401.

At step S401, the UE 101 sends the indication information to a network device 102, where the indication information is used for indicating the network device 102 to skip, within a first duration, uplink reception of a preset channel.

In response to the network device 102 configuring a plurality of sets of resource configurations of preset channels, the indication information is used for indicating the network device 102 to skip, within the first duration, the uplink reception of a preset channel satisfying a set condition.

In some embodiments, in response to the preset channels being PUCCHs used for transmitting SRs, the preset channel satisfying the set condition includes a PUCCH that is used for transmitting the SR and has a same characteristic parameter as a first CG-PUSCH, where the first CG-PUSCH is a CG-PUSCH carrying the indication information.

In some possible embodiments, the characteristic parameter includes at least one of the following:
a period;
a group identification;
a priority identification.

In an example, the priority identification of the PUCCH used for transmitting the SR is the same as the priority identification of the first CG-PUSCH.

In the embodiments of the present disclosure, in a scenario where the preset channels are PUCCHs used for transmitting SRs, the network device 102 skips, within the first duration, the uplink reception of the PUCCH that is used for transmitting the SR and has the same characteristic parameter as the first CG-PUSCH, thereby saving the power consumption.

The embodiments of the present disclosure provide a method for sending indication information that is performed by a UE 101. With reference to FIG. 5, FIG. 5 is a method for sending indication information illustrated according to an exemplary embodiment. As shown in FIG. 5, the method includes step S501~step S502, and the specifics are as follows.

At step S501, the UE 101 determines a start position of a first duration.

At step S502, the UE 101 sends the indication information to a network device 102, where the indication information is used for indicating the network device 102 to skip, within the first duration, uplink reception of a preset channel.

In some possible embodiments, after the start position is determined, the UE 101 may carry the start position in the indication information.

In some possible embodiments, the UE 101 skips, by starting from the start position, the uplink sending of the preset channel, and the network device 102 skips, by starting from the start position, the uplink reception of the preset channel.

In the embodiments of the present disclosure, the UE 101, after being informed of the start position, may indicate, by indicating in the indication information the time domain position for skipping the sending of the preset channel, the network device 102 the time domain interval for skipping the reception.

The embodiments of the present disclosure provide a method for sending indication information that is performed by a UE 101. The method includes step S501'~step S502, and the specifics are as follows.

At step S501', the UE 101 determines, based on a CG-PUSCH where the indication information is located, a start timepoint of a next CG-PUSCH of the CG-PUSCH where the indication information is located as a start position.

At step S502, the UE 101 sends the indication information to a network device 102, where the indication information is used for indicating the network device 102 to skip, within a first duration, uplink reception of a preset channel.

In some possible embodiments, CG-UCI in the CG-PUSCH carries the indication information.

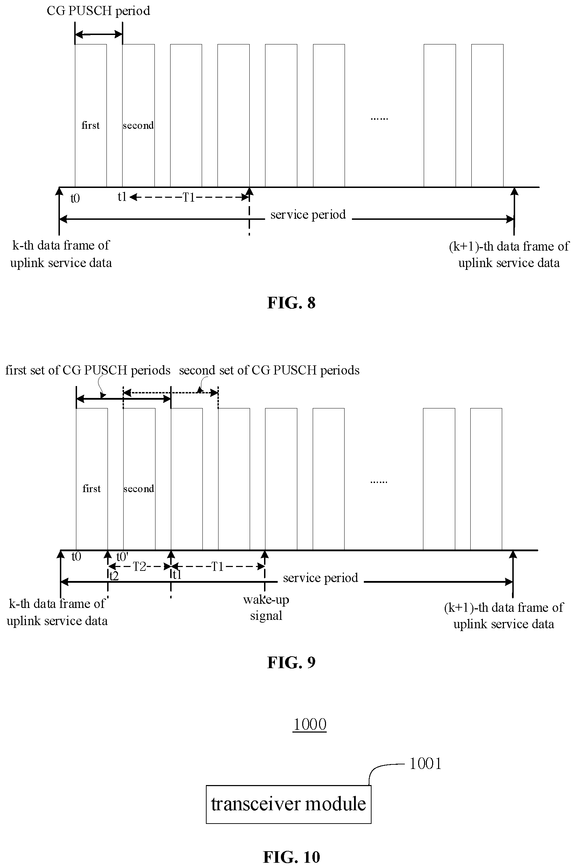

In some possible embodiments, as shown in conjunction with FIG. 8, the UE 101 carries the indication information in the CG-UCI of the n-th CG-PUSCH, where the validation position, i.e., the start position, of the indication information is the start timepoint of the (n+1)-th CG-PUSCH.

In some possible embodiments, as shown in conjunction with FIG. 8, starting from the start position, the UE 101 skips sending the preset channel for a duration of the first duration. Starting from the start position, the network device 102 skips the uplink reception of the preset channel for a duration of the first duration.

In some possible embodiments, the start position may be included in the indication information.

In the embodiments of the present disclosure, based on the indication information of the UE 101, the network device 102 can start skipping the reception of the preset channel at a suitable position, effectively saving energy consumption.

The embodiments of the present disclosure provide a method for sending indication information that is performed by a UE 101. The method includes step S501"~step S502, and the specifics are as follows.

At step S501", the UE 101 determines a preset timepoint after an end timepoint of a CG-PUSCH where the indication information is located as a start position, where a second duration is spaced between the end timepoint and the preset timepoint.

At step S502, the UE 101 sends the indication information to a network device 102, where the indication information is used for indicating the network device 102 to skip, within a first duration, uplink reception of a preset channel.

In some possible embodiments, CG-UCI in the CG-PUSCH carries the indication information.

In some possible embodiments, the second duration may be set to be a demodulation time of the network device 102 for the CG-UCI.

In an example, the value of the second duration may be protocol-defined, or configured by the network device 102.

In some possible embodiments, this embodiment may be applied to scenarios where the period of the CG-PUSCH is less than a set value.

In the embodiments of the present disclosure, the start position is determined based on the demodulation capability of the network device 102, which enables the network device 102 to reasonably skip the reception of the preset channel and save the energy consumption on the basis of ensuring that the network device 102 effectively obtains the indication information.

The embodiments present disclosure provide a method for sending indication information that is performed by a UE 101. The method includes step S400~step S401, and the specifics are as follows.

At step S400, configuration information sent by a network device is received, where the configuration information is used for indicating a first duration.

At step S401, the UE 101 sends the indication information to the network device 102, where the indication information is used for indicating the network device 102 to skip, within the first duration, uplink reception of a preset channel.

In the embodiments of the present disclosure, the UE 101 is informed of the value of the first duration based on the configuration of the network device 102, and may include the first duration in the indication information and report the indication information to the network device.

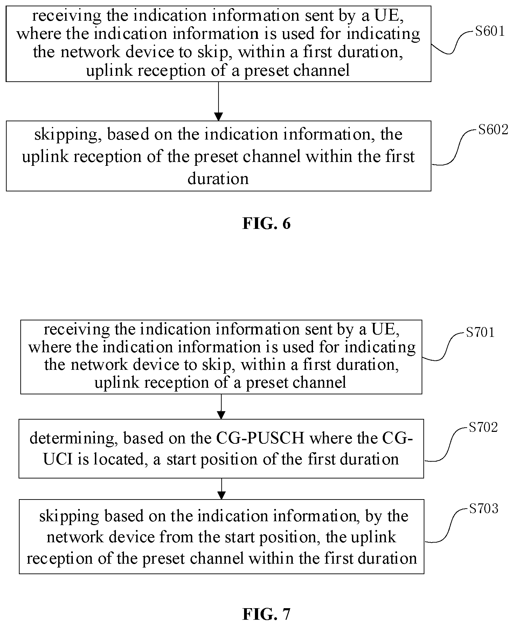

The embodiments of the present disclosure provide a method for receiving indication information that is performed by a network device 102. With reference to FIG. 6, FIG. 6 is a method for receiving indication information illustrated according to an exemplary embodiment. As shown in FIG. 6, the method includes steps S601~S602, and the specifics are as follows.

At step S601, the network device 102 receives the indication information sent by a UE 101, where the indication information is used for indicating the network device 102 to skip, within a first duration, uplink reception of a preset channel.

At step S602, the network device 102 skips, based on the indication information, the uplink reception of the preset channel within the first duration.

In some possible embodiments, the preset channel includes a CG-PUSCH, or a PUCCH used for transmitting an SR.

In an example, the network device 102 skips within the first duration, based on the indication information, the uplink reception of the CG-PUSCH.

In an example, the network device 102 skips within the first duration, based on the indication information, the uplink reception of the SR.

In some possible embodiments, in a scenario where a plurality of sets of resource configurations of preset channels are configured, the network device 102 skips the uplink reception of all the preset channels, or skips the uplink reception of a preset channel satisfying a set condition.

In an example, when a plurality of sets of resource configurations of CG-PUSCHs are configured, the network device 102 skips the uplink reception of all the CG-PUSCHs, or skips the uplink reception of a CG-PUSCH satisfying a set condition.

In an example, when a plurality of sets of resource configurations of SRs are configured, the network device 102 skips the uplink reception of all the SRs, or skip the uplink reception of an SR satisfying a set condition.

In some possible embodiments, the first duration is a value configured by the network device 102.

In some possible embodiments, the first duration is determined by the network device 102 based on actual scheduling.

In an example, the network device 102 maintains a state of not receiving the preset channel within the first duration, and wakes up upon receiving a wake-up signal from the UE 101 and receives the preset channel, and the first duration is terminated.

In the embodiments of the present disclosure, the network device 102 is informed, through the indication information reported by the UE 101, of the time period and channel that can be skipped for the uplink reception. Thereby, the network device 102, based on the indication information, can skip the uplink reception of the preset channel within the first duration to reduce the blind-detect reception of the network device 102 and reduce the energy consumption of the network device 102.

The embodiments of the present disclosure provide a method for receiving indication information that is performed by a network device 102. The method includes steps S601'~S602, and the specifics are as follows.

At step S601', the network device 102 receives CG-UCI carried by a UE 101 in a CG-PUSCH, where the CG-UCI includes the indication information, and the indication information is used for indicating the network device 102 to skip, within the first duration, the uplink reception of the preset channel.

At step S602, the network device 102 skips within the first duration, based on the indication information, the uplink reception of the preset channel.

In some possible embodiments, the CG-UCI is uplink control information sent in the CG-PUSCH in an accompany manner.

In an example, the CG-UCI carries the indication information.

In some possible embodiments, the value of the first duration is indicated in the CG-UCI.

In some possible embodiments, the preset channel includes a CG-PUSCH, or a PUCCH used for transmitting an SR.

In the embodiments of the present disclosure, the network device 102 is informed of the indication information carried by the UE 101 through the CG-UCI, which facilitates skipping the uplink reception of the preset channel based on the indication information, and saves the energy consumption.

The embodiments of the present disclosure provide a method for receiving indication information that is performed by a network device 102. With reference to FIG. 7, FIG. 7 is a method for receiving indication information illustrated according to an exemplary embodiment. As shown in FIG. 7, the method includes steps S701~S703, and the specifics are as follows.

At step S701, the network device 102 receives the indication information sent by a UE 101, where the indication information is used for indicating the network device 102 to skip, within a first duration, uplink reception of a preset channel.

At step S702, a start position of the first duration is determined based on a CG-PUSCH where CG-UCI is located.

At step S703, based on the indication information, the network device 102 skips from the start position, within the first duration, the uplink reception of the preset channel.

In some possible embodiments, the preset channel includes a CG-PUSCH, or a PUCCH used for transmitting an SR.

In some possible embodiments, in a scenario where a plurality of sets of resource configurations of preset channels are configured, the network device 102 skips the uplink reception of all the preset channels, or skips the uplink reception of a preset channel satisfying a set condition.

In an example, when a plurality of sets of resource configurations of CG-PUSCHs are configured, the network device 102 skips the uplink reception of all the CG-PUSCHs, or skips the uplink reception of a CG-PUSCH satisfying a set condition.

In an example, when a plurality of sets of resource configurations of SRs are configured, the network device 102 skips the uplink reception of all the SRs, or skips the uplink reception of an SR satisfying a set condition.

In some possible embodiments, the start position is included in the indication information, and the network device 102 determines the start position based on the indication information as received.

In some possible embodiments, the network device 102 determines the start position based on the time domain position of the indication information as received.

In the embodiments of the present disclosure, the network device 102 determines, based on the indication information as received, the start position at which the indication information takes effect, i.e., the start position at which the skipping of the uplink reception is performed. Thereby, the network device 102 starts performing the skipping of uplink reception of the preset channel at a reasonable time, which saves the energy consumption.

The embodiments of the present disclosure provide a method for receiving indication information that is performed by a network device 102. The method includes steps S701, S702' and S703, and the specifics are as follows.

At step S701, the network device 102 receives the indication information sent by a UE 101, where the indication information is used for indicating the network device 102 to skip, within a first duration, uplink reception of a preset channel.

At step S702', a start timepoint of a next CG-PUSCH of a CG-PUSCH where CG-UCI is located is determined as a start position.

At step S703, based on the indication information, the network device 102 skips from the start position, within the first duration, the uplink reception of the preset channel.

In some possible embodiments, the UE 101 carries the indication information in the CG-UCI of the n-th CG-PUSCH, where the validation position, i.e., the start position, of the indication information is the start timepoint of the (n+1)-th CG-PUSCH.

In some possible embodiments, starting from the start position, the network device 102 skips the uplink reception of the preset channel, and a duration for skipping the reception is the first duration.

In the embodiments of present disclosure, based on the indication information of the UE 101, the network device 102 can start skipping the reception of the preset channel at a suitable position, effectively saving the energy consumption.

The embodiments of the present disclosure provide a method for receiving indication information that is performed by a network device 102. The method includes steps S701, S702" and S703, and the specifics are as follows.

At step S701, the network device 102 receives the indication information sent by a UE 101, where the indication information is used for indicating the network device 102 to skip, within a first duration, uplink reception of a preset channel.

At step S702", a preset timepoint after an end timepoint of a CG-PUSCH where CG-UCI is located is determined as a start position, and a second duration is spaced between the end timepoint and the preset timepoint.

At step S703, based on the indication information, the network device 102 skips from the start position, within the first duration, the uplink reception of the preset channel.

In some possible embodiments, the second duration may be set to be a demodulation time of the network device 102 for the CG-UCI.

In some possible embodiments, this embodiment may be applied to scenarios where the period of the CG-PUSCH is less than a set value.

In the embodiments of the present disclosure, the start position is determined based on the demodulation capability of the network device 102, which enables the network device 102 to reasonably skip the reception of the preset channel and save the energy consumption on the basis of ensuring that the network device 102 effectively obtains the indication information.

The embodiments present disclosure provide a method for receiving indication information that is performed by a network device 102. The method includes steps S601 and S603, and the specifics are as follows.

At step S601, the network device 102 receives the indication information sent by a UE 101, where the indication information is used for indicating the network device 102 to skip, within a first duration, uplink reception of a preset channel.

In some embodiments, in response to the network device 102 configuring a plurality of sets of resource configurations of preset channels, the indication information is used for indicating the network device to skip, within the first duration, the uplink reception of all the preset channels corresponding to the plurality of sets of resource configurations.

At step S603, based on the indication information, the network device 102 skips, within the first duration, the uplink reception of all the preset channels corresponding to the plurality of sets of resource configurations.

In some possible embodiments, the preset channels include CG-PUSCHs, or PUCCHs used for transmitting SRs.

In some possible embodiments, the plurality of sets of resource configurations of preset channels configured by the network device 102 include a plurality of sets of resource configurations of CG-PUSCHs.

In an example, when a plurality of sets of resource configurations of CG-PUSCHs are configured, the network device 102 skips the uplink reception of all the CG-PUSCHs.

In some possible embodiments, the plurality of sets of resource configurations of preset channels configured by the network device 102 include a plurality of sets of resource configurations of PUCCHs used for transmitting SRs.

In an example, when a plurality of sets of resource configurations of SRs are configured, the network device 102 skips the uplink reception of all the SRs.

In the embodiments of the present disclosure, based on the indication information, the network device 102 skips, within the first duration, the uplink reception of all the preset channels, which effectively saves the energy consumption of the network device 102.

The embodiments of the present disclosure provide a method for receiving indication information that is performed by a network device 102. The method includes steps S601 and S604, and the specifics are as follows.

At step S601, the network device 102 receives the indication information sent by a UE 101, where the indication information is used for indicating the network device 102 to skip, within a first duration, uplink reception of a preset channel.

At step S604, the network device 102, based on the indication information, skips within the first duration the uplink reception of a CG-PUSCH satisfying a set condition, where the indication information is used for indicating the network device 102 to skip within the first duration, in a scenario where the network device 102 configures a plurality of sets of resource configurations of CG-PUSCHs, the uplink reception of the CG-PUSCH satisfying the set condition.

The embodiment of the present disclosure is applicable to scenarios where the network device 102 configures a plurality of sets of resource configurations of CG-PUSCHs for the UE 101. Based on the indication information, the network device 102 skips, within the first duration, the uplink reception of the CG-PUSCH that satisfies the set condition, which effectively saves the energy consumption of the network device 102.

The embodiments of the present disclosure provide a method for receiving indication information that is performed by a network device 102. The method includes steps S601 and S604, and the specifics are as follows.

At step S601, the network device 102 receives the indication information sent by a UE 101, where the indication information is used for indicating the network device 102 to skip, within a first duration, uplink reception of a preset channel.

At step S604, the network device 102, based on the indication information, skips within the first duration the uplink reception of a CG-PUSCH satisfying a set condition, where the indication information is used for indicating the network device 102 to skip within the first duration, in a scenario where the network device 102 configures a plurality of sets of resource configurations of CG-PUSCHs, the uplink reception of the CG-PUSCH satisfying the set condition.

In some embodiments, the preset channel satisfying the set condition is a first CG-PUSCH (CG-PUSCH Config1) carrying the indication information, and/or at least one second CG-PUSCH having a same characteristic parameter as the first CG-PUSCH.

In some possible embodiments, the characteristic parameter includes at least one of the following:
a period;
a group identification;
a priority identification.

In an example, the period of the second CG-PUSCH is the same as the period of the first CG-PUSCH.

In an example, the priority identification of the second CG-PUSCH is the same as the priority identification of the first CG-PUSCH.

For example, based on the indication of the priority identification, both the second CG-PUSCH and the first CG-PUSCH correspond to a low priority.

In an example, the group identification of the second CG-PUSCH is the same as the group identification of the first CG-PUSCH. In some embodiments, the group identification of each of the sets of CG-PUSCHs is included in the resource configuration information corresponding to that CG-PUSCH.

In an example, multiple sets of CG-PUSCHs with the same group identification may have different start bias values, and the remaining parameters may be the same. The multiple sets of CG-PUSCHs with the same group identification are used for transmitting the same service flow.

In an example, the first CG-PUSCH is noted as CG-PUSCH Config1, and the second CG-PUSCH includes CG-PUSCH Config2 and CG-PUSCH Config3. When the group identification of CG-PUSCH Config1, the group identification of CG-PUSCH Config2, and the group identification of CG-PUSCH Config3 are the same, it is indicated that these three CG-PUSCHs serve the same service flow.

In the embodiments of the present disclosure, in scenarios where the preset channels are CG-PUSCHs, the network device 102 skips, within the first duration, the uplink reception of the first CG-PUSCH and the second CG-PUSCH, thereby saving the power consumption.

The embodiments of the present disclosure provide a method for receiving indication information that is performed by a network device 102. The method includes steps S601 and S605, and the specifics are as follows.

At step S601, the network device 102 receives the indication information sent by a UE 101, where the indication information is used for indicating the network device 102 to skip, within a first duration, uplink reception of a preset channel.

At step S605, the network device 102, based on the indication information, skips within the first duration the uplink reception of a PUCCH that is used for transmitting an SR and satisfies a set condition, where the indication information is used for indicating the network device 102 to skip within the first duration, in a scenario where the network device 102 configures a plurality of sets of resource configurations of PUCCHs used for transmitting the SR, the uplink reception of the PUCCH that is used for transmitting the SR and satisfies the set condition.

The embodiment of the present disclosure is applicable to scenarios where the network device 102 configures for the UE 101 a plurality of sets of resource configurations of PUCCHs used for transmitting the SR. Based on the indication information, the network device 102 skips, within the first duration, the uplink reception of the SR that satisfies the set condition, effectively saving the energy consumption of the network device 102.

The embodiments of the present disclosure provide a method for receiving indication information that is performed by a network device 102. The method includes steps S601 and S605, and the specifics are as follows.

At step S601, the network device 102 receives the indication information sent by a UE 101, where the indication information is used for indicating the network device 102 to skip, within a first duration, uplink reception of a preset channel.

At step S605, the network device 102, based on the indication information, skips within the first duration the uplink reception of a PUCCH that is used for transmitting an SR and satisfies a set condition, where the indication information is used for indicating the network device 102 to skip within the first duration, in a scenario where the network device 102 configures a plurality of sets of resource configurations of PUCCHs used for transmitting the SR, the uplink reception of the PUCCH that is used for transmitting the SR and satisfies the set condition.

In some embodiments, the preset channel satisfying the set condition includes a PUCCH that is used for transmitting the SR and has a same characteristic parameter as a first CG-PUSCH, where the first CG-PUSCH is a CG-PUSCH carrying the indication information.

In some possible embodiments, the characteristic parameter includes at least one of the following:
a period;
a group identification;
a priority identification.

In an example, the priority identification of the PUCCH used for transmitting the SR is the same as the priority identification of the first CG-PUSCH.

In the embodiments of the present disclosure, in scenarios where the preset channels are PUCCHs used for transmitting the SR, the network device 102 skips, within the first duration, the uplink reception of the PUCCH that is used for transmitting the SR and has the same characteristic parameter as the first CG-PUSCH, thereby saving the power consumption.

The embodiments of the present disclosure provide a method for receiving indication information that is performed by a network device 102. The method includes steps S601~S602 and S606, and the specifics are as follows.

At step S601, the network device 102 receives the indication information sent by a UE 101, where the indication information is used for indicating the network device 102 to skip, within a first duration, uplink reception of a preset channel.

At step S602, the network device 102 skips, based on the indication information, the uplink reception of the preset channel within the first duration.

At step S606, in response to receiving a wake-up signal from the UE 101, the network device 102 terminates the first duration, and performs the uplink reception of the preset channel.

In the embodiments of the present disclosure, the first duration is not predetermined. The network device 102 determines the first duration based on the actual scheduling, maintains a state of not receiving the preset channel within the first duration, and wakes up upon receiving a wake-up signal from the UE 101 and receives the preset channel, and the first duration is terminated. Thereby, the uplink reception is performed in a timely manner on the basis of reducing the energy consumption of the network device 102.

To facilitate the understanding of the embodiments of the present disclosure, two examples are set forth below for description.

### Example I

As shown in conjunction with FIG. 8, a plurality of CG-PUSCHs are included in a service period of two adjacent data frames. In the service period between the k-th data frame and the (k+1)-th data frame illustrated in the drawing, based on the configuration of the network device 102, a set of CG-PUSCH resource configurations is included in this service period, where the CG-PUSCH has a start bias value of t0.

The UE 101 may send, by carrying the indication information in the CG-UCI of the first CG-PUSCH, the indication information to the network device 102.

The value of the first duration T1 may be included in the indication information. In addition, the UE 101 may determine the start position t1 of the first duration as the start timepoint of the second CG-PUSCH, and may select to carry this start position t1 in the indication information.

The UE 101 starts skipping the uplink sending of the CG-PUSCH from the start position t1 for a duration of the first duration T1.

The network device 102 starts skipping, based on the indication information as received, the uplink reception of the CG-PUSCH from the start position t1 for a duration of the first duration T1. Thereby, the network device 102 can reduce the blind detection and save the energy consumption during this service cycle.

### Example II

As shown in conjunction with FIG. 9, a plurality of CG-PUSCHs are included in a service period of two adjacent data frames. In the service period between the k-th data frame and the (k+1)-th data frame illustrated in the drawing, based on the configuration of the network device 102, two sets of CG-PUSCH resource configurations are included in this service period, where the first set of CG-PUSCHs has a start bias value of t0, and the second set of CG-PUSCHs has a start bias value of t0'. The periods of the two sets of CG-PUSCHs may be the same.

The UE 101 may send, by carrying the indication information in the CG-UCI of the first CG-PUSCH, the indication information to the network device 102. The value of the first duration T1 and the start position t1 are not included in the indication information.

The UE 101 and the network device 102 may respectively determine, based on the first CG-PUSCH where the CG-UCI is located, a preset timepoint t1 after an end timepoint t2 of the first CG-PUSCH as the start position. In some embodiments, a second duration T2 is spaced between t2 and t1.

The UE 101 starts skipping the uplink sending of the CG-PUSCH from the start position t1 for a duration of the first duration T1.

The network device 102 starts skipping the uplink reception of the CG-PUSCH from the start position t1 for a duration of the first duration T1. The network device 102 may skip the reception of both the first set of CG-PUSCHs and the second set of CG-PUSCHs within the first duration.

When a wake-up signal from the UE 101 is received, the first duration is terminated, and the network device 102 will perform the uplink reception of the CG-PUSCH. Thereby, during this service period, the network device 102 can reduce the blind detection and save the energy consumption.

It can be understood that the above example uses the CG-PUSCH in periodic uplink service data for illustrative description, where the time domain positions involved are used for indicating the time domain intervals where the network device 102 performs skipping of the reception of the preset channel, rather than a limitation of the time domain positions. In other embodiments, the methods of the present disclosure may also be applied in the transmission of non-periodic uplink service data, or to a plurality of sets of CG-PUSCHs with different periods, where the time domain position points involved may vary.

Based on the same idea as the above method embodiments, the embodiments of the present disclosure also provide an apparatus for sending indication information. The apparatus may have the function of the UE 101 in the above method embodiments, and may be configured to perform the steps executed by the UE 101 provided in the above embodiments. The function may be implemented by hardware, or may be implemented by software or hardware executing corresponding software. The hardware or software includes one or more modules corresponding to the above-described function.

In a possible implementation, the apparatus 1000 as shown in FIG. 10 may serve as the UE 101 involved in the above method embodiments, and perform the steps executed by the UE 101 in the above method embodiments. As shown in FIG. 10, the apparatus 1000 may include a transceiver module 1001, where the transceiver module 1001 may be configured to support the communication device for communication.

In performing the steps implemented by the UE 101, the transceiver module 1001 is configured to send the indication information to a network device 102, where the indication information is used for indicating the network device 102 to skip, within a first duration, uplink reception of a preset channel.

In some possible embodiments, the transceiver module 1001 is further configured to send, in response to the network device 102 configuring a CG-PUSCH for the UE 101, the indication information to the network device 102 via the CG-PUSCH.

In some possible embodiments, the transceiver module 1001 is further configured to send the indication information to the network device 102 through CG-UCI carried in the CG-PUSCH.

In some possible embodiments, in response to the network device 102 configuring a plurality of sets of resource configurations of preset channels, the indication information is used for indicating the network device 102 to skip, within the first duration, the uplink reception of all the preset channels corresponding to the plurality of sets of resource configurations.

In some possible embodiments, the preset channels include CG-PUSCHs, or PUCCHs used for transmitting the SR.

In some possible embodiments, in response to the network device 102 configuring a plurality of sets of resource configurations of preset channels, the indication information is used for indicating the network device 102 to skip, within the first duration, the uplink reception of a preset channel satisfying a set condition.

In some possible embodiments, in response to the preset channels being CG-PUSCHs, the preset channel satisfying the set condition is a first CG-PUSCH carrying the indication information.

In some possible embodiments, in response to the preset channels being CG-PUSCHs, the preset channel satisfying the set condition includes a first CG-PUSCH carrying the indication information, and at least one second CG-PUSCH having a same characteristic parameter as the first CG-PUSCH.

In some possible embodiments, in response to the preset channels being PUCCHs used for transmitting an SR, the preset channel satisfying the set condition includes a PUCCH that is used for transmitting the SR and has a same characteristic parameter as a first CG-PUSCH, and the first CG-PUSCH is a CG-PUSCH carrying the indication information.

In some possible embodiments, the characteristic parameter includes at least one of the following:
a period;
a group identification;
a priority identification.

In some possible embodiments, the apparatus further includes a processing module. The processing module is configured to determine a start position for skipping uplink sending of the preset channel.

In some possible embodiments, the processing module is further configured to determine, based on a CG-PUSCH where the indication information is located, a start timepoint of a next CG-PUSCH of the CG-PUSCH where the indication information is located as the start position.

In some possible embodiments, the processing module is further configured to determine a preset timepoint after an end timepoint of a CG-PUSCH where the indication information is located as the start position, where a second duration is spaced between the end timepoint and the preset timepoint.

In some possible embodiments, the transceiver module 1001 is further configured to receive configuration information sent by the network device 102, where the configuration information is used for indicating the first duration.

When the apparatus for receiving the configuration information is a UE 101, its structure may also be shown in FIG. 9. The apparatus 900 may be a cell phone, a computer, a digital broadcast terminal, a message transceiver device, a game console, a tablet device, a medical device, a fitness device, or a personal digital assistant.

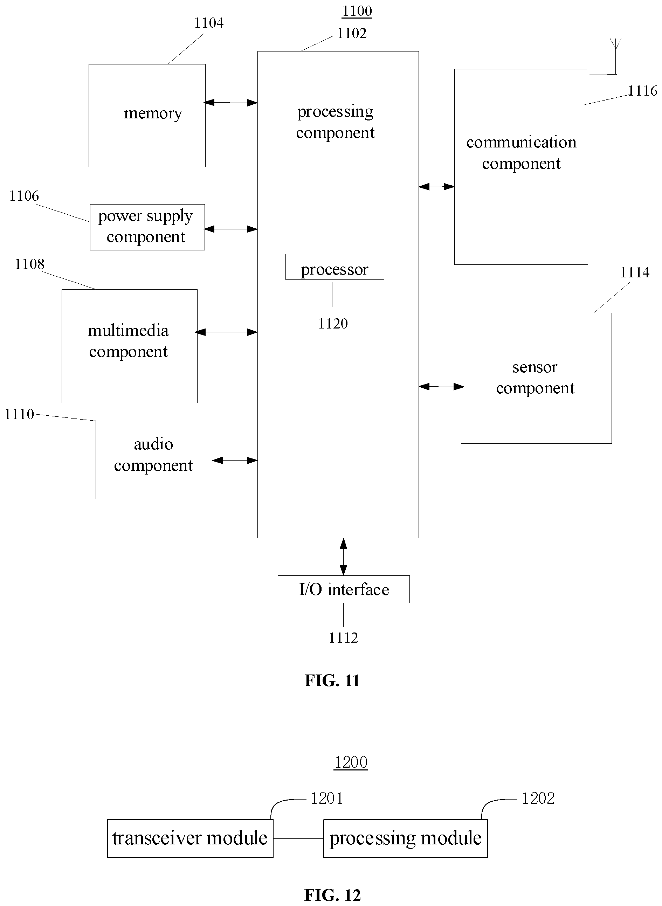

Referring to FIG. 11, the apparatus 1100 may include one or more of the following components: a processing component 1102, a memory 1104, a power supply component 1106, a multimedia component 1108, an audio component 1110, an input/output (I/O) interface 1112, a sensor component 1114, a communication component 1116.

The processing component 1102 generally controls overall operation of the apparatus 1100, such as operations associated with display, telephone calls, data communication, camera operations, and recording operations. The processing component 1102 may include one or more processors 1120 to execute an instruction, thereby completing all or a part of the steps of the methods described above. In addition, the processing component 1102 may include one or more modules that facilitate interaction between the processing component 1102 and other components. For example, the processing component 1102 may include a multimedia module to facilitate interaction between the multimedia component 1108 and the processing component 1102.

The memory 1104 is configured to store various types of data to support operations at the apparatus 1100. Examples of such data include the following for any application program or method operated on the apparatus 1100: instructions, contact data, phonebook data, messages, pictures, videos, etc. The memory 1104 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or a CD-ROM.

The power supply component 1106 supplies power to various components of the apparatus 1100. The power supply component 1106 may include a power supply management system, one or more power supplies, and other components associated with generating, managing and distributing power for the apparatus 1100.

The multimedia component 1108 includes a screen that provides an output interface between the apparatus 1100 and a user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense the boundaries of the touch or swipe action, but also detect the duration and pressure associated with the touch or swipe operation. In some embodiments, the multimedia component 1108 includes a front-facing camera and/or a rear-facing camera. The front-facing camera and/or the rear-facing camera may receive external multimedia data when the apparatus 1100 is in an operating mode, such as a shooting mode or a video mode. Each of the front-facing camera and the rear-facing camera may be a fixed optical lens system or have a focal length and optical zoom capability.

The audio component 1110 is configured to output and/or input audio signals. For example, the audio component 1110 includes a microphone (MIC), configured to receive external audio signals when the apparatus 1100 is in an operating mode, such as a calling mode, a recording mode and a voice recognition mode. The received audio signals may be further stored in the memory 1104 or sent via the communication component 1116. In some embodiments, the audio component 1110 further includes a speaker for outputting the audio signals.

The I/O interface 1112 provides an interface between the processing component 1102 and a peripheral interface module. The peripheral interface module described above may be a keypad, a click wheel, a button, etc. These buttons may include, but are not limited to, a home button, a volume button, a start button, and a lock button.

The sensor component 1114 includes one or more sensors configured to provide status assessment of various aspects of the apparatus 1100. For example, the sensor component 1114 may detect an open/closed state of the apparatus 1100, relative positioning of the components, for example, the components are the display and small keypad of the apparatus 1100; the sensor component 1114 may also detect a change in the position of the apparatus 1100 or a change in the position of one component of the apparatus 1100, the presence or absence of user contact with the apparatus 1100, the orientation or acceleration/deceleration of the apparatus 1100, and temperature changes of the apparatus 1100. The sensor component 1114 may include a proximity sensor that is configured to detect the presence of nearby objects in the absence of any physical contact. The sensor component 1114 may also include a light sensor, such as a CMOS or CCD image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate the communication between the apparatus 1100 and other devices by wired or wireless means. The apparatus 1100 may access a wireless network based on a communication standard, such as WiFi, 2G, 3G, or a combination thereof. In an exemplary embodiment, the communication component 1116 receives broadcast signals or broadcast-related information from an external broadcast management system via a broadcast channel. In an exemplary embodiment, the communication component 1116 further includes a near-field communication (NFC) module to facilitate short-range communication. For example, the NFC module may be implemented based on the radio frequency identification (RFID) technology, the infrared data association (IrDA) technology, the ultra-wideband (UWB) technology, the Bluetooth (BT) technology, and the like.

In an exemplary embodiment, the apparatus 1100 may be implemented by one or more of the following: an application-specific integrated circuit (ASIC), a digital signal processor (DSP), a digital signal processing device (DSPD), a programmable logic device (PLD), a field-programmable gate array (FPGA), a controller, a microcontroller, a microprocessor, or other electronic elements, for performing the above methods.

In an exemplary embodiment, a non-transitory computer-readable storage medium including an instruction is also provided, such as the memory 1104 including an instruction. The instruction described above is capable of being executed by the processor 1120 of the apparatus 1100 to complete the above methods. For example, the non-transitory computer-readable storage medium may be an ROM, a random access memory (RAM), a CD-ROM, a magnetic tape, a floppy disk, or an optical data storage device.

Based on the same idea as the above method embodiments, the embodiments of the present disclosure also provide an apparatus for receiving indication information. The apparatus may have the function of the network device 102 in the above method embodiments, and may be configured to perform the steps executed by the network device 102 provided in the above embodiments. The function may be implemented by hardware, or may be implemented by software or hardware executing corresponding software. The hardware or software includes one or more modules corresponding to the above-described function.

In a possible implementation, the communication device 1200 as shown in FIG. 12 may serve as the network device 102 involved in the above method embodiments, and perform the steps executed by the network device 102 in the above method embodiments. As shown in FIG. 12, the communication device 1200 may include a transceiver module 1201 and a processing module 1202 coupled to each other. The transceiver module 1201 may be configured to support the communication device for communication. The transceiver module 1201 may have a wireless communication function, such as communicating wirelessly with other communication devices through a wireless air interface. The processing module 1202 may be configured for the communication device to perform a processing operation, such as generating information/messages to be sent, or processing a received signal to obtain information/messages.

In performing the steps implemented by the network device 102, the transceiver module 1201 is configured to receive the indication information sent by a UE, where the indication information is used for indicating the network device to skip, within a first duration, uplink reception of a preset channel. The processing module 1202 is configured to skip, based on the indication information, the uplink reception of the preset channel within the first duration.

In some possible implementations, the transceiver module 1201 is further configured to receive CG-UCI carried by the UE in a CG-PUSCH, where the CG-UCI includes the indication information.

In some possible implementations, the processing module 1202 is further configured to determine, based on the CG-PUSCH where the CG-UCI is located, a start position for skipping the uplink reception of the preset channel.

In some possible implementations, the processing module 1202 is further configured to determine a start timepoint of a next CG-PUSCH of the CG-PUSCH where the CG-UCI is located as the start position.

In some possible implementations, the processing module 1202 is further configured to determine a preset timepoint after an end timepoint of the CG-PUSCH where the CG-UCI is located as the start position, where a second duration is spaced between the end timepoint and the preset timepoint.

In some possible implementations, in response to the network device configuring a plurality of sets of resource configurations of preset channels, the indication information is used for indicating the network device to skip, within the first duration, the uplink reception of all the preset channels corresponding to the plurality of sets of resource configurations.

In some possible implementations, the processing module 1202 is further configured to skip within the first duration, based on the indication information, the uplink reception of all the preset channels corresponding to the plurality of sets of resource configurations.

In some possible embodiments, the preset channels include CG-PUSCHs, or PUCCHs used for transmitting an SR.

In some possible implementations, the processing module 1202 is further configured to skip within the first duration, based on the indication information, the uplink reception of a CG-PUSCH satisfying a set condition; where
the indication information is used for indicating the network device to skip within the first duration, in a scenario where the network device configures a plurality of sets of resource configurations of CG-PUSCHs, the uplink reception of the CG-PUSCH satisfying the set condition.

In some possible embodiments, the preset channel satisfying the set condition includes a first CG-PUSCH carrying the indication information, and/or at least one second CG-PUSCH having a same characteristic parameter as the first CG-PUSCH.

In some possible implementations, the processing module 1202 is further configured to skip within the first duration, based on the indication information, the uplink reception of a PUCCH that is used for transmitting an SR and satisfies a set condition, where
the indication information is used for indicating the network device to skip within the first duration, in a scenario where the network device configures a plurality of sets of resource configurations of PUCCHs used for transmitting the SR, the uplink reception of the PUCCH that is used for transmitting the SR and satisfies the set condition.

In some possible embodiments, the preset channel satisfying the set condition includes the PUCCH that is used for transmitting the SR and has a same characteristic parameter as a first CG-PUSCH, and the first CG-PUSCH is a CG-PUSCH carrying the indication information.

In some possible implementations, the processing module 1202 is further configured to, in response to receiving a wake-up signal from the UE, terminate the first duration, and perform the uplink reception of the preset channel.

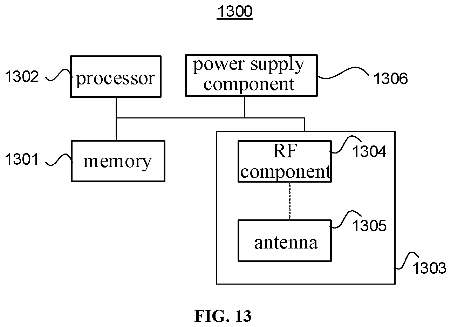

When the communication device is a network device 102, its structure may also be shown in FIG. 13. The structure of the communication device is illustrated by taking the base station as an example. As shown in FIG. 13, the device 1300 includes a memory 1301, a processor 1302, a transceiver component 1303, and a power supply component 1306. The memory 1301 is coupled to the processor 1302, and may be configured to store programs and data necessary for the communication device 1300 to implement various functions. The processor 1302 is configured to support the communication device 1300 in performing the corresponding function in the above methods, and the function may be implemented by invoking a program stored in the memory 1301. The transceiver component 1303 may be a wireless transceiver that may be configured to support the communication device 1300 in performing, via a wireless air interface, receiving signaling and/or data, and sending signaling and/or data. The transceiver component 1303 may also be referred to as a transceiver unit or a communication unit, and the transceiver component 1303 may include a radio frequency (RF) component 1304 and one or more antennas 1305, where the RF component 1304 may be a remote radio unit (RRU), which may be specifically configured for transmission of RF signals and conversion between RF signals and baseband signals, and the one or more antennas 1305 may be specifically configured to perform radiation and reception of RF signals.

When the communication device 1300 needs to send data, the processor 1302, after performing baseband processing on the data to be sent, may output a baseband signal to an RF unit, and the RF unit, after performing RF processing on the baseband signal, sends the RF signal in the form of electromagnetic waves through the antenna. When there is data sent to the communication device 1300, the RF unit receives an RF signal through the antenna, converts the RF signal to a baseband signal, and outputs the baseband signal to the processor 1302, and the processor 1302 converts the baseband signal to data and processes the data.

After considering the specification and practicing the invention disclosed herein, those skilled in the art will easily come up with other implementation solutions of the embodiments of the present disclosure. The present disclosure is intended to cover any variations, uses or adaptive changes of the embodiments of the present disclosure, and the variations, uses or adaptive changes follow the general principles of the embodiments of the present disclosure and include common knowledge or commonly used technical means in the art that are not disclosed in the present disclosure. The specification and embodiments are only considered to be exemplary, and the true scope and spirit of the embodiments of the present disclosure are indicated by the following claims.

It should be understood that the embodiments of the present disclosure are not limited to the precise structure which has been described above and illustrated in the accompanying drawings, and that various modifications and alterations may be made without departing from the scope of the embodiments of the present disclosure. The scope of the embodiments of the present disclosure is limited only by the appended claims.

### INDUSTRIAL APPLICABILITY

In the embodiments of the present disclosure, the UE notifies, by sending the indication information to the network device, the network device of the time period and channel that can be skipped for the uplink reception. Thereby, the network device, based on the indication information, can skip the uplink reception of the preset channel within the first duration to reduce the blind-detect reception of the network device and reduce the energy consumption of the network device.

## Claims

1. A method for sending indication information, performed by a user equipment (UE), wherein the method comprises:
sending the indication information to a network device, wherein the indication information is used for indicating the network device to skip, within a first duration, uplink reception of a preset channel.

2. The method according to claim 1, wherein the sending the indication information to the network device comprises:
sending, in response to the network device configuring a configured grant physical uplink shared channel (CG-PUSCH) for the UE, the indication information to the network device via the CG-PUSCH.

3. The method according to claim 2, wherein the sending the indication information to the network device comprises:
sending the indication information to the network device through uplink control information (CG-UCI) carried in the CG-PUSCH.

4. The method according to claim 1, wherein in response to the network device configuring a plurality of sets of resource configurations of preset channels, the indication information is used for indicating the network device to skip, within the first duration, the uplink reception of all the preset channels corresponding to the plurality of sets of resource configurations.

5. The method according to claim 4, wherein the preset channel comprises a CG-PUSCH, or a physical uplink control channel (PUCCH) used for transmitting a scheduling request (SR).

6. The method according to claim 1, wherein in response to the network device configuring a plurality of sets of resource configurations of preset channels, the indication information is used for indicating the network device to skip, within the first duration, the uplink reception of a preset channel satisfying a set condition.

7. The method according to claim 6, wherein in response to the preset channels being CG-PUSCHs, the preset channel satisfying the set condition is a first CG-PUSCH carrying the indication information.

8. The method according to claim 6, wherein in response to the preset channels being CG-PUSCHs, the preset channel satisfying the set condition comprises a first CG-PUSCH carrying the indication information, and at least one second CG-PUSCH having a same characteristic parameter as the first CG-PUSCH.

9. The method according to claim 6, wherein in response to the preset channels being PUCCHs used for transmitting an SR, the preset channel satisfying the set condition comprises a PUCCH that is used for transmitting the SR and has a same characteristic parameter as a first CG-PUSCH, and the first CG-PUSCH is a CG-PUSCH carrying the indication information.

10. The method according to claim 8 or 9, wherein the characteristic parameter comprises at least one of:
a period;
a group identification; and
a priority identification.

11. The method according to claim 1, wherein the method further comprises:
determining a start position of the first duration.

12. The method according to claim 11, wherein the determining the start position of the first duration comprises:
determining, based on a CG-PUSCH where the indication information is located, a start timepoint of a next CG-PUSCH of the CG-PUSCH where the indication information is located as the start position.

13. The method according to claim 11, wherein the determining the start position of the first duration comprises:
determining a preset timepoint after an end timepoint of a CG-PUSCH where the indication information is located as the start position, wherein a second duration is spaced between the end timepoint and the preset timepoint.

14. The method according to claim 1, wherein the method further comprises:
receiving configuration information sent by the network device, wherein the configuration information is used for indicating the first duration.

15. A method for receiving indication information, performed by a network device, wherein the method comprises:
receiving the indication information sent by a user equipment (UE), wherein the indication information is used for indicating the network device to skip, within a first duration, uplink reception of a preset channel; and
skipping, based on the indication information, the uplink reception of the preset channel within the first duration.

16. The method according to claim 15, wherein the receiving the indication information sent by the UE comprises:
receiving uplink control information (CG-UCI) carried by the UE in a configured grant physical uplink shared channel (CG-PUSCH), wherein the CG-UCI comprises the indication information.

17. The method according to claim 16, wherein the method further comprises:
determining, based on the CG-PUSCH where the CG-UCI is located, a start position of the first duration.

18. The method according to claim 17, wherein the determining, based on the CG-PUSCH where the CG-UCI is located, the start position of the first duration comprises:
determining a start timepoint of a next CG-PUSCH of the CG-PUSCH where the CG-UCI is located as the start position.

19. The method according to claim 17, wherein the determining, based on the CG-PUSCH where the CG-UCI is located, the start position of the first duration comprises:
determining a preset timepoint after an end timepoint of the CG-PUSCH where the CG-UCI is located as the start position, wherein a second duration is spaced between the end timepoint and the preset timepoint.

20. The method according to claim 15, wherein in response to the network device configuring a plurality of sets of resource configurations of preset channels, the indication information is used for indicating the network device to skip, within the first duration, the uplink reception of all the preset channels corresponding to the plurality of sets of resource configurations.

21. The method according to claim 20, wherein the skipping, based on the indication information, the uplink reception of the preset channel within the first duration comprises:
skipping within the first duration, based on the indication information, the uplink reception of all the preset channels corresponding to the plurality of sets of resource configurations.

22. The method according to claim 20 or 21, wherein the preset channels comprise CG-PUSCHs, or physical uplink control channels (PUCCHs) used for transmitting a scheduling request (SR).

23. The method according to claim 15, wherein the skipping, based on the indication information, the uplink reception of the preset channel within the first duration comprises:
skipping within the first duration, based on the indication information, the uplink reception of a CG-PUSCH satisfying a set condition; wherein
the indication information is used for indicating the network device to skip within the first duration, in a scenario where the network device configures a plurality of sets of resource configurations of CG-PUSCHs, the uplink reception of the CG-PUSCH satisfying the set condition.

24. The method according to claim 23, wherein the preset channel satisfying the set condition comprises a first CG-PUSCH carrying the indication information, and/or at least one second CG-PUSCH having a same characteristic parameter as the first CG-PUSCH.

25. The method according to claim 15, wherein the skipping, based on the indication information, the uplink reception of the preset channel within the first duration comprises:
skipping within the first duration, based on the indication information, the uplink reception of a PUCCH that is used for transmitting an SR and satisfies a set condition, wherein
the indication information is used for indicating the network device to skip within the first duration, in a scenario where the network device configures a plurality of sets of resource configurations of PUCCHs used for transmitting the SR, the uplink reception of the PUCCH that is used for transmitting the SR and satisfies the set condition.

26. The method according to claim 25, wherein the preset channel satisfying the set condition comprises the PUCCH that is used for transmitting the SR and has a same characteristic parameter as a first CG-PUSCH, and the first CG-PUSCH is a CG-PUSCH carrying the indication information.

27. The method according to claim 15, wherein the method further comprises:
in response to receiving a wake-up signal from the UE, terminating the first duration, and performing the uplink reception of the preset channel.

28. An apparatus for sending indication information, configured for a user equipment (UE), wherein the apparatus comprises:
a transceiver module, configured to send the indication information to a network device, wherein the indication information is used for indicating the network device to skip, within a first duration, uplink reception of a preset channel.

29. An apparatus for receiving indication information, configured for a network device, wherein the apparatus comprises:
a transceiver module, configured to receive the indication information sent by a user equipment (UE), wherein the indication information is used for indicating the network device to skip, within a first duration, uplink reception of a preset channel; and
a processing module, configured to skip, based on the indication information, the uplink reception of the preset channel within the first duration.

30. A communication device, comprising a processor and a memory, wherein
the memory is configured to store a computer program; and
the processor is configured to execute the computer program to implement the method according to any one of claims 1-14.

31. A communication device, comprising a processor and a memory, wherein
the memory is configured to store a computer program; and
the processor is configured to execute the computer program to implement the method according to any one of claims 15-27.

32. A computer-readable storage medium, wherein the computer-readable storage medium stores an instruction, and the instruction, when invoked and executed on a computer, causes the computer to perform the method according to any one of claims 1-14.

33. A computer-readable storage medium, wherein the computer-readable storage medium stores an instruction, and the instruction, when invoked and executed on a computer, causes the computer to perform the method according to any one of claims 15-27.
